# EUROPÄISCHE PATENTSCHRIFT

(11) **EP 1 545 952 B1**
(45) Veröffentlichungstag und Bekanntmachung des Hinweises auf die Patenterteilung: **27.02.2008**
(21) Anmeldenummer: 03773632.9
(22) Anmeldetag: 23.09.2003
(51) Int. Cl.: B60T 8/40, F04B 1/04

(54) **FÖRDERVORRICHTUNG**
SUPPLY DEVICE
DISPOSITIF DE REFOULEMENT

(30) Priorität: 24.09.2002 DE 10244374
(43) Veröffentlichungstag der Anmeldung: 29.06.2005
(73) Patentinhaber: Continental Teves AG & Co. oHG, 60488 Frankfurt am Main (DE)
(72) Erfinder: DINKEL, Dieter, 65824 Schwalbach (DE); HINZ, Axel, 61267 Neu-Anspach (DE); OTTO, Albrecht, 61137 Schöneck (DE); ZENTGRAF, Hans-Georg, 65428 Rüsselsheim (DE); ZUK, Daniela, 65199 Wiesbaden (DE)
(86) Internationale Anmeldenummer: PCT/EP2003/010561
(87) Internationale Veröffentlichungsnummer: WO 2004/028878

(56) Entgegenhaltungen:
- WO-A-01/70550
- WO-A-99/06704
- DE-U- 9 319 462

## Beschreibung

Die Erfindung betrifft eine Fördervorrichtung zum Fördern von Druckmittel in wenigstens eine Fahrzeugbremse oder in einen Druckmittelspeicher oder in einen Hauptbremzylinder, wobei ein Kolben in einem Aufnahmekörper bewegbar angeordnet ist, ein Träger ein koaxial zu dem Kolben angeordnetes Rückschlagventil zwecks Ventilation eines Arbeitsraumes trägt, in den der Kolben eintaucht, und wobei eine Rückstellfeder zwischen Träger und Kolben angeordnet ist.

Eine derartige Fördervorrichtung ist in Gestalt einer Fördervorrichtung aus der EP 0 734 494 A1 bekannt. Der Kolben ist Bestandteil einer selbständig handhabbaren Baueinheit, zu der ein zweites Rückschlagventil zur Ventilation des Arbeitsraumes sowie die Rückstellfeder gehört. Dadurch wird es ermöglicht, die genannten Bauteile als Einheit in eine Bohrung einzuführen. In einem gesonderten Schritt wird der Träger für das Rückschlagventil unter gleichzeitiger elastischer Vorspannung der Rückstellfeder in die verlängerte Bohrung eingeführt. Die Prozeßsicherheit dieses Montagevorgangs ist verbesserungsfähig, weil die Rückstellfeder bei der Vorspannung ausknicken kann. Um dies auszuschließen können besondere Abstimmungsmaßnahmen vorgesehen werden, welche es zu vermeiden gilt.

Es ist eine Aufgabe der vorliegenden Erfindung, eine Fördervorrichtung anzugeben, deren Aufbau eine vereinfachte Montage unter Baugruppenbildung sowie Vorspannung der Rückstellfeder erlaubt.

Die Aufgabe wird gelöst, indem ein mehrteiliger Käfig zur elastisch vorgespannten Kapselung der Rückstellfeder derart vorgesehen ist, daß die Rückstellfeder in die Käfigteile einlegbar und mit diesen komprimierbar ist, wobei eine Arretierung der mit Befestigungsmitteln versehenen Käfigteile aneinander infolge relativer Verschiebung der Käfigteile zueinander, und unter gleichzeitiger Vorspannung der Rückstellfeder erfolgt. Mit der erfindungsgemäßen Bauweise wird es ermöglicht, zeitgleich mit einem Montageschritt zum Zusammenfügen der Käfigteile eine paketartige Vorspannung der Rückstellfeder vorzunehmen und umgekehrt. Dieser Prozess erfolgt außerhalb des Aufnahmekörpers oder desjenigen Bauteiles, in dem die Federbaugruppe installiert werden soll. Daher ist eine arbeitsteilige Vormontage möglich.

Bei einer besonders bevorzugten Ausführungsform der Erfindung ist für die Befestigung der Käfigteile aneinander eine Rastverbindung vorgesehen, wobei an wenigstens einem ersten Käfigteil ein Rastarm zum Eingriff in eine Rastausnehmung eines zugeordneten zweiten Käfigteils vorgesehen ist. Dadurch werden kostenintensive gesonderte Befestigungsschritte wie beispielsweise ein Schweißvorgang oder ein Bördelvorgang vermieden.

In weiterhin vorteilhafter Ausgestaltung der Erfindung sind an jedem Käfigteil mehrere, vorzugsweise paarweise vorgesehene sowie einander diametral gegenüberliegende Befestigungsmittel vorgesehen. Dadurch wird mit geringem Aufwand eine sichere Aufnahme der Federkräfte im Käfig ermöglicht. Eine Erhöhung der Anzahl der Befestigungsmittel ist prinzipiell möglich.

Die einander gegenüberliegenden Befestigungsmittel eines Käfigbauteiles sind bevorzugt gleich ausgebildet, was die Werkzeugherstellung erleichtert, wenn die Käfigteile aus Blechwerkstoff hergestellt werden. Darüber hinaus kann die Teilezuführung bei einem automatischen Montageprozeß vereinfacht werden. Es ist jedoch auch möglich, jeweils unterschiedliche Befestigungsmittel vorzusehen, ohne die Erfindung zu verlassen.

Das Zusammenfügen der Käfigteile wird erleichtert, wenn jeder Käfigteil wenigstens einen gesonderten Abschnitt zur Zentrierung von einem Abschnitt eines zu befestigenden Käfigteils aufweist. Ferner kann - soweit gewünscht - auf gesonderte Sortierprozesse oder Lageausrichtvorgänge während der Montage verzichtet werden. Gemäß einer bevorzugenswerten Variante der Erfindung sind die Befestigungsmittel ggf. unter Verzicht auf einen gesonderten Abschnitt zwecks Zentrierung derart angeordnet, daß auf eine rotatorische Ausrichtung der Käfigbauteil - bezogen auf die Bauteilachse - vollständig verzichtet werden kann. Dies wird bewirkt, indem die Käfigteile mehr Rastarme als Rastausnehmungen aufweisen, und daß die Rastarme in Käfigteil-Umfangsrichtung mit ihrer Breite wesentlich schmaler ausgebildet sind, als eine Breite der Rastausnehmungen, so daß in Käfigteil-Umfangsrichtung relativ zueinander beliebig verdreht angeordnete Käfigteile unmittelbar arretierbar sind. Einzelheiten zu dieser Ausgestaltung gehen aus Unteransprüchen hervor.

Der Einfluß von Bauteiltoleranzen wird minimiert, indem ein Käfigteil eine zylindrische Wandung aufweist, mit der der Käfig zur Bildung einer Baueinheit in einem Träger aufgenommen ist, und daß der trägerseitige Aufnahmebereich unabhängig von, sowie im Abstand zu den Befestigungsmitteln für die Käfigteile vorgesehen ist. Dadurch hat beispielsweise eine Maßabweichung in dem Aufnahmebereich keinen unmittelbaren Einfluß auf die Befestigung der Käfigteile aneinander und umgekehrt.

Aus einem nebengeordneten Patentanspruch geht eine Federbaugruppe umfassen zwei Käfigteile sowie eine Rückstellfeder zum Einsatz in einer elektronisch geregelten Bremsanlage hervor.

Die Erfindung wird nachstehend anhand der Zeichnung erläutert, welche ein bevorzugtes Ausführungsbeispiel der Erfindung in größerem Maßstab zeigt:
Fig. 1 eine Fördervorrichtung im Schnitt,
Fig. 2 ein erstes Käfigteil mit Rastarmen im Schnitt,
Fig. 3 ein zweites Käfigteil mit einer Rastausnehmung im Schnitt,
Fig. 4 eine perspektivische Ansicht einer zweiten Ausführungsform eines Käfigs im montierten Zustand,
Fig. 5 eine Explosionsdarstellung der Einzelteile des Käfigs gemäß Fig. 4, und
Fig. 6 eine perspektivische Skizze zur Verdeutlichung der Überdeckung von Befestigungsmitteln an Käfigteilen.

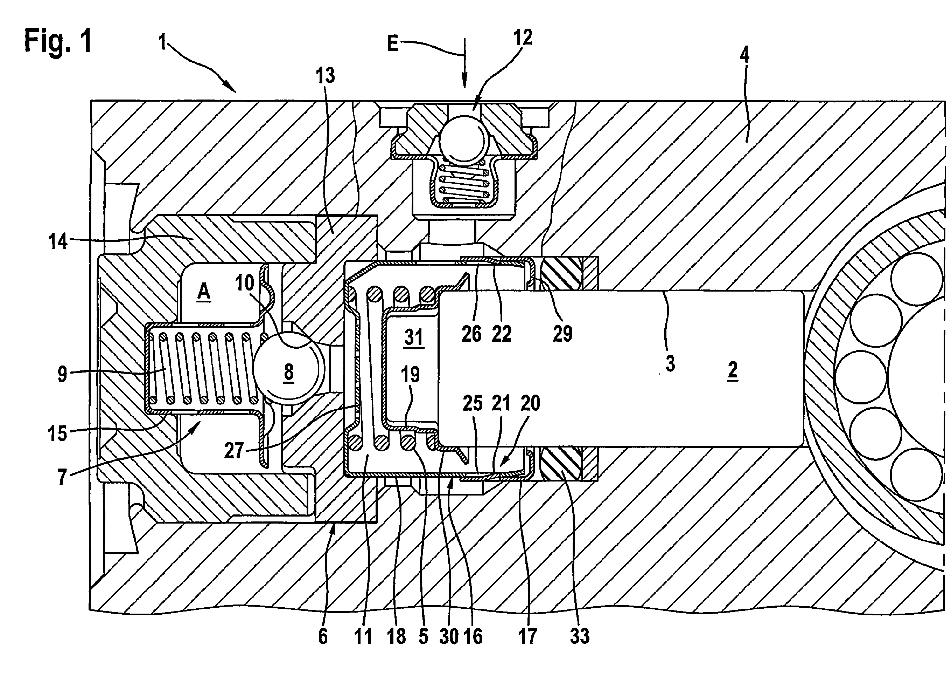

Die Fig. 1 zeigt eine Fördervorrichtung 1 deren Kolben 2 in einer Bohrung 3 eines Aufnahmekörpers 4 bewegbar geführt angeordnet ist, welcher Bestandteil eines mit einer elektronischen Regeleinheit (ECU) versehenen elektrohydraulischen Aggregates ist. Zur Führung des Kolbens 2 kann auch eine, in die Bohrung 3 eingesetzte Laufbuchse oder eine - wie nachstehend noch beschrieben wird, - kombinierte Lösung vorgesehen sein, bei der Laufbuchse, Käfig 16 sowie Rückschlagventil 7 eine Baugruppe bilden. Der Aufnahmekörper 4 weist ferner nicht dargestellte, elektromagnetisch ansteuerbare Ventile sowie diese miteinander verbindende, nicht gezeigte Kanäle auf, welche es erlauben, Druckmittel zur kontrollierten Druckerhöhung aus einem Arbeitsraum 11 in einen nicht gezeichneten Druckmittelspeicher oder in nicht verdeutlichte Fahrzeugbremsen zu fördern. Dadurch wird eine Fahrzeugregelbremsung, oder ein Regeleingriff wie beispielsweise ein Fahrstabilitätsregeleingriff (ESP) oder ein anderer Regeleingriff wie insbesondere eine Schlupfregelung ermöglicht.

Der Kolben 2 liegt über ein Wälzlager mittelbar mit einem Ende an einem antreibenden Exzenter an, welcher von einer Welle eines nicht dargestellten Elektromotors in Rotation versetzt wird. Eine Rückstellfeder 5 ist zwischen einem Träger 6 für ein Rückschlagventil 7 (Druckventil) und dem Kolben 2 angeordnet.

Wie aus der Fig. 1 hervorgeht, dient ein als Druckventil ausgebildetes Rückschlagventil 7 der Ventilation des Arbeitsraumes 11. Zu diesem Zweck wird ein Ventilkörper 8 durch eine Feder 9 permanent in eine Schließstellung zur Anlage an einen trägerseitigen Dichtsitz 10 gepresst. Nur in einem Druckhub des Kolben 2 überwindet die an dem Ventilkörper 8 anliegende Druckdifferenz die wirksamen Federkräfte, so daß sich der Ventilkörper 8 zur Ventilation des Arbeitsraumes 11 in die nicht dargestellte Öffnungsstellung bewegt, wodurch der Druckmittelauslaß aus dem Arbeitsraum 11 erfolgt. Im Saughub ist der Druckmittelauslaß A versperrt, und das Druckmittel gelangt durch ein in einem Einlaß E vorgesehenes Rückschlagventil 12, welches in Schließstellung gezeichnet ist, in den Arbeitsraum 11.

Der Träger 6 ist zweiteilig und verfügt über einen scheibenförmigen Boden 13, an dem der Dichtsitz 10 für das Rückschlagventil 7 vorgesehen ist. In dem Boden 13 befindet sich eine Durchgangsbohrung zum Druckmitteldurchlaß von dem Arbeitsraum 11 in den Auslaß A. Ein napfförmiges zweites Teil 14 ist an dem Boden 13 befestigt und nimmt einen Topf 15 für die Feder 9 auf. Auf einer, dem zweiten Teil 14 gegenüberliegenden Seite befindet sich ein Käfig 16 für die paketförmig vorgespannte Rückstellfeder 5, welcher neben zwei Käfigteilen 16,17 noch einen napfförmigen Federtopf 19 zur Anlage und Zentrierung der Rückstellfeder 5 an dem Kolben 2 aufweist. Im vollständig montierten Zustand liegt der Federtopf 19 an einer Kolbenstirnseite an und übergreift mit einer Napfwandung 30 den Kolben 2 zumindest teilweise im Bereich von dem Kolbenende 31. Eine kraftschlüssige Klemmung zwischen Federtopf 19 und Kolben 2 ist möglich.

Wie zu ersehen ist, sind auch die Käfigteile 17,18 als napfförmige Blechformteile mit einer zylindrischen Wandung und mit einem Bord 29 oder einem Boden 27 ausgebildet, an welche jeweils ein Ende der Rückstellfeder 5 anlegbar ist.

Im montierten Zustand der Fördervorrichtung hält der Bord 29 mit einer Außenseite eine Kolbendichtung 33 an ihrem Ort innerhalb der abgestuften Bohrung 3. Bei Anlieferung der Käfig-Baugruppe liegt jedoch der Federtopf 19 an einer Innenseite von dem Bord 29 an. Die Käfigteile 16,17 können im Rahmen einer kombinierten Lösung grundsätzlich eine Führungs- und Laufbuchsenfunktion für den Kolben 2 und ferner eine integrierte Haltefunktion für eines oder beide Rückschlagventile 7,12 aufweisen.

Je nach gewünschter Abstimmung der Fördervorrichtung können die Käfigteile 17,18 mit entsprechenden Durchbrüchen 28 versehen sein. Wenn ein kostengünstiger Fremdkörperschutz gewünscht ist, können die Durchbrüche 28 siebartig ausgebildet sein, um das Druckventil vor Verschmutzung zu schützen, und eine Filterwirkung zu erzeugen. Zur Verbesserung des Niedertemperartur-Verhaltens bei zähviskosem Druckmittel können die Käfigteile 16,17 jedoch mit erweiterten Durchbrüchen 28 in der zylindrischen Wandung sowie im Boden 27 versehen sein, die mit Filtersieben überdeckbar sind. Sofern jedoch genügend ungenutzte Rastausnehmungen 25,26 vorgesehen sind, kann bereits deren Öffnungsquerschnitt ausreichen, um ein gutes Ansaugverhalten zu ermöglichen, sb daß lediglich noch im Bereich des Bodens 27 auf ein gutes Ausströmverhalten aus dem Arbeitsraum 11 zu achten ist. Zu diesem Zweck kann der Boden 27 mit großzügigen Durchbrüchen 28 und ggf. mit zusätzlichen Filtersieben versehen sein. Der Käfig 16 kann bis an seine Stbilitätsgrenze mit Durchbrüchen 28 versehen sein, weil die Käfigwirkung lediglich bis zur Endmontage der Fördervorrichtung benötigt wird. Im Betrieb der Fördervorrichtung ist die Käfigwirkung nicht mehr erforderlich. Aus diesem Grund wird für die Käfigteile 17,18 möglichst wenig Werkstoff eingesetzt werden. Von diesem Grundsatz wird lediglich bei einer kombinierten Lösung abgewichen werden.

Ein wesentliches Merkmal der Erfindung ist, daß die Käfigteile 17,18 so gestaltet sind, daß sie die Rückstellfeder 5 aufnehmen, und gleichzeitig sowohl als Werkzeug als auch als Käfig 16 zum Vorspannen dienen. Die Arretierung der mit Befestigungsmitteln 20 versehenen Käfigteile 17,18 aneinander erfolgt mittels relativer Verschiebung dieser Käfigteile 17,18 zueinander, und unter gleichzeitiger Vorspannung der Rückstellfeder 5. Separate Verfahrensschritte zum Befestigen der Käfigteile 17,18 aneinander entfallen.

Für die gegenseitige Befestigung der Käfigteile 17,18 ist eine Rastverbindung vorgesehen, wobei an dem Käfigteil 17 zwei gleiche, sowie diametral gegenüberliegende, auskragende Rastarme 21,22 vorgesehen sind, deren freie Enden 23,24 formschlüssig in jeweils eine Rastausnehmung 25,26 an dem anderen Käfigteil 17,18 eingreifen. Es ist jedoch auch möglich, an jedem Käfigteil 17,18 jeweils einen Rastarm und jeweils eine Rastausnehmung vorzusehen, so daß die Befestigungsmittel 20 zwar paarweise aber ungleich vorgesehen sind. Ferner ist es möglich, von der paarweisen Anordnung der Befestigungsmittel 20 Abstand zu nehmen, indem beispielsweise eine ungerade Anzahl an Befestigungsmitteln 20 - beispielsweise jeweils drei - vorgesehen wird.

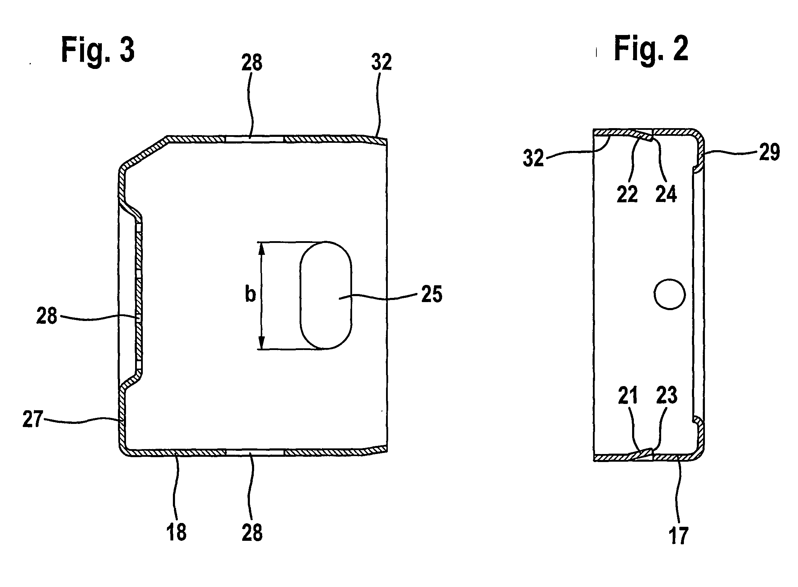

Vorzugsweise verfügt jedes Käfigteil 17,18 am Ende seiner zylindrischen Wandung - also vorzugsweise an einem Punkt, welcher zuerst mit dem gegenüberliegenden Käfigteil 17,18 in Eingriff gerät - über einen ausgeprägt abgerundeten oder konisch-abgeschrägten Führungsabschnitt 32 zur radialen Zentrierung und Führung des zu befestigenden anderen Käfigteiles 18,17. Gemäß Fig. 3 befindet sich der Führungsabschnitt 32 an dem Käfigteil 18, was jedoch auch umgekehrt oder generell an beiden Käfigteilen 17,18 möglich ist. Mit anderen Worten können sich die zugeordneten Käfigteile 17,18 mittels Führungsabschnitt 32 während ihres Annäherungsprozesses aufeinander zu gewissermaßen selbsttätig zueinander ausrichten. Alle Führungsabschnitte 32 sind so ausgebildet, daß der Raumbedarf im Aufnahmekörper 4 nicht unnötig vergrößert wird. Dies erfordert eine generelle Orientierung der Führungsabschnitte 32 nach radial innen. Axial im Abstand zu dem Führungsabschnitt 32 sowie im Abstand zu den Befestigungsmitteln 20 ist ein Aufnahmeabschnitt vorgesehen, mit dem der Käfig 16 kraft- oder formschlüssig zur Bildung einer Baueinheit insbesondere in einer Vertiefung des Bodens 13 aufgenommen ist. Sowohl Führungsabschnitt 32, als auch Aufnahmeabschnitt befinden sich im wesentlichen auf einem gemeinsamen Durchmesser der rohrförmigen Wandung des jeweiligen Käfigteils 17,18.

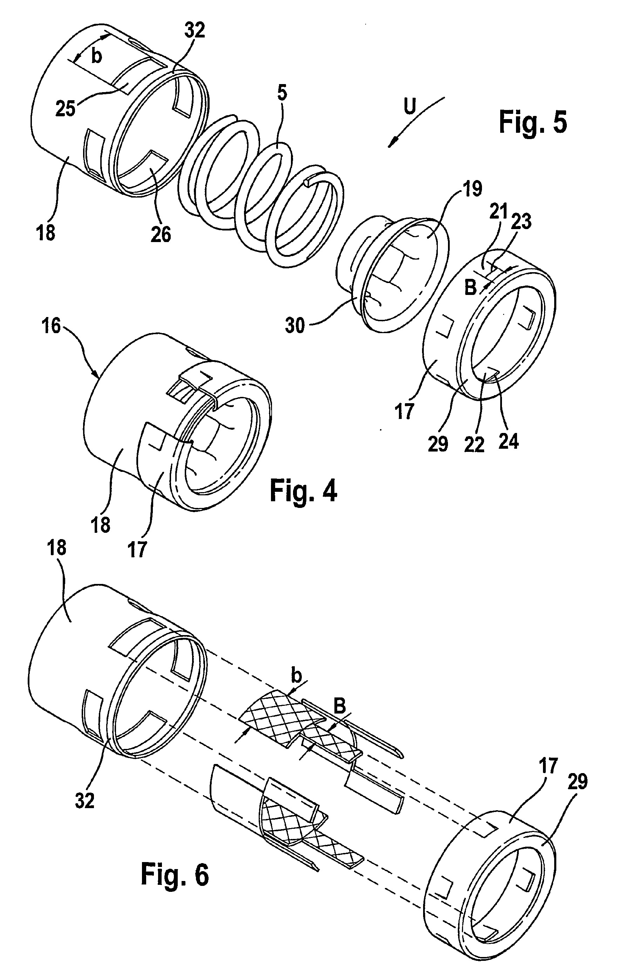

Vorstehend wurde primär eine Ausführungsform beschrieben, welche während des Montageprozesses in einer Käfigteil-Umfangsrichtung U eine präzise ausgerichtete Zuführung der Käfigteile erfordert, damit die Befestigungsmittel 20 wirksam werden. Dieses Erfordernis lässt sich mit Vorteil durch eine Variante gemäß Fig. 4 bis 6 umgehen. Wie aus den Figuren 4-6 unschwer hervorgeht, verfügen die Käfigteile 17,18 über mehr Rastarme 21,22 als Rastausnehmungen 25,26, wobei die Rastarme 21,22 in Käfigteil-Umfangsrichtung U eine Breite B aufweisen, welche wesentlich geringer ausgebildet ist, als die entsprechende Breite b der Rastausnehmungen 25,26 (bezogen auf die Käfigteil-Umfangsrichtung U). Durch diese Maßnahme können beliebig zueinander verdreht angeordnete Käfigteile 17,18 zwecks Arretierung miteinander gepaart werden, ohne eine gesonderte Bauteilindexierung oder Ausrichtung vorsehen zu müssen. Es ist lediglich darauf zu achten, daß sich die richtigen Seiten der Käfigteile 17,18 mit ihren Befestigungsmitteln 20 gegenüberliegen, was einfach abgefragt bzw. sichergestellt werden kann. In Kombination mit den Führungsabschnitten 32 für eine radiale Zentrierung der Käfigteile 17,18 erlaubt diese Variante eine besonders vorteilhafte, weil prozessichere Montage. Innerhalb der Grenze, daß die Anzahl aller Rastarme 21,22 größer zu bemessen ist, als die Anzahl aller Rastausnehmungen, kann die Absolute Zahl von Rastarmen und Rastausnehmungen, wie auch deren absolute Maßgestaltung in Käfigteil-Umfangsrichtung U vielfältig variiert werden. Bei dem dargestellten Ausführungsbeispiel sind lediglich beispielhaft sechs Rastarme 21,22 mit der Breite B und vier Rastausnehmungen 25,26 mit der Breite b vorgesehen.

Schließlich verdeutlicht die Fig. 6 in perspektivischer Art zwei Käfigteile 17,18, wobei in der dazwischen befindlichen Skizze, Felder mit einer definierten Breite sowie Anordnung in Käfigteil-Umfangsrichtung U wiedergegeben sind, die der tatsächlichen Anordnung eines entsprechenden Befestigungsmittels an einem Käfigteil entsprechen. Mit anderen Worten ist die Breite B,b von Rastarmen 21,22 und Rastausnehmungen 25,26 abgetragen, und nur wenn die Breite B deckungsgleich mit der Breite b ist, liegt eine wirksame Arretierung in diesem Bereich vor. Alle anderen, nicht oder nur teilweise deckungsgleichen Befestigungsmittel 20 bleiben wirkungslos. Wie die Fig. 6 verdeutlicht, ist Deckungsgleichheit lediglich im Bereich der kreuzschraffierten Felder gegeben, so daß nur die entsprechenen Befestigungsmittel 20 wirksam sind, welche sich in wesentlichen diametral gegenüber liegen, wodurch eine definierte Arretierung des Käfigs 16 sicher gestellt wird.

Es wird darauf hingewiesen, daß die Erfindung ausdrücklich nicht auf die Kapselung von Kolben-Rückstellfedern von Fördervorrichtungen für schlupfgeregelte Bremsanlagen (ABS,ASR,ESP) beschränkt ist. Nur beispielsweise sei daher erwähnt, daß eine Erweiterung auf Federbaugruppen von Rückschlagventilen mit zwei oder mehr Käfigteilen, und einer Rückstellfeder zur elastischen Vorspannung eines Schließkörpers in Richtung auf einen Dichtsitz möglich ist, ohne den grundsätzlichen Erfindungsgedanken zu verlassen. Dabei kann der Dichtsitz zur weiteren Vereinfachung an einem Käfigteil integriert vorgesehen sein.

### Bezugszeichenliste:

- 1: Fördervorrichtung
- 2: Kolben
- 3: Bohrung
- 4: Aufnahmekörper
- 5: Rückstellfeder
- 6: Träger
- 7: Rückschlagventil
- 8: Ventilkörper
- 9: Feder
- 10: Dichtsitz
- 11: Arbeitsraum
- 12: Rückschlagventil
- 13: Boden
- 14: Teil
- 15: Topf
- 16: Käfig
- 17: Käfigteil
- 18: Käfigteil
- 19: Federtopf
- 20: Befestigungsmittel
- 21: Rastarm
- 22: Rastarm
- 23: Ende
- 24: Ende
- 25: Rastausnehmung
- 26: Rastausnehmung
- 27: Boden
- 28: Durchbruch
- 29: Bord
- 30: Napfwandung
- 31: Kolbenende
- 32: Führungsabschnitt
- 33: Kolbendichtung

- U: Käfigteil-Umfangsrichtung
- B: Breite (Rastarm)
- b: Breite (Rastausnehmung)

## Patentansprüche

1. Fördervorrichtung zum Fördern von Druckmittel in wenig stens eine Fahrzeugbremse, oder in einen Druckmittelspeicher, oder in einen Hauptbremszylinder, mit den Merkmalen;
ein Kolben (2) ist in einem Aufnahmekörper (4) bewegbar angeordnet;
ein Träger (6) trägt ein koaxial zu dem Kolben (2) angeordnetes Rückschlagventil (7) zwecks Ventilation eines Arbeitsraumes (11), in den der Kolben (2) eintaucht;
eine Rückstellfeder (5) ist zwischen Träger (6) und Kolben (2) angeordnet,
**dadurch gekennzeichnet, daß**
ein mehrteiliger Käfig (16) zur elastisch vorgespannten Kapselung der Rückstellfeder (5) derart vorgesehen ist, daß die Rückstellfeder (5) in Käfigteile (17,18) einlegbar und mit diesen komprimierbar ist, wobei eine Arretierung der mit Befestigungsmitteln (20) versehenen Käfigteile (17,18) aneinander infolge relativer Verschiebung der Käfigteile (17,18) zueinander, unter gleichzeitiger Vorspannung der Rückstellfeder (5) erfolgt.

2. Fördervorrichtung nach Anspruch 1, **dadurch gekennzeichnet,daß** für die Befestigung der Käfigteile (17,18) aneinander eine Rastverbindung vorgesehen ist, wobei an wenigstens einem ersten Käfigteil (17) wenigstens ein Rastarm (21,22) zum Eingriff in eine Rastausnehmung (25,26) eines zugeordneten zweiten Käfigteils (18) vorgesehen ist.

3. Fördervorrichtung nach Anspruch 1, **dadurch gekennzeichnet, daß** jedes Käfigteil (17,18) mehrere Befestigungsmittel (20) aufweist, und daß zur Arretierung der Käfigteile (17,18) wenigstens zwei Paar Befestigungsmittel (20) mit zwei Rastarmen (21,22) und zwei Rastausnehmungen (25,26) wirksam sind.

4. Fördervorrichtung nach Anspruch 3, **dadurch gekennzeichnet, daß** die beiden wirksamen Befestigungsmittel (20) im wesentlichen zueinander gegenüberliegend angeordnet sind.

5. Fördervorrichtung nach Anspruch 1, **dadurch gekennzeichnet, daß** jedes Käfigteil (17,18) paarweise vorgesehene sowie einander diametral gegenüberliegende Befestigungsmittel (20) aufweist.

6. Fördervorrichtung nach Anspruch 5, **dadurch gekennzeichnet, daß** gegenüberliegende Befestigungsmittel (20) eines Käfigteiles (17,18) jeweils gleich ausgebildet sind.

7. Fördervorrichtung nach Anspruch 5, **dadurch gekennzeichnet, daß** gegenüberliegende Befestigungsmittel (20) eines Käfigteiles (17,18) jeweils unterschiedlich ausgebildet sind.

8. Fördervorrichtung nach Anspruch 1, **dadurch gekennzeichnet, daß** wenigstens ein Käfigteil (17,18), insbesondere zur gegenseitigen radialen Zentrierung und Führung, einen gesonderten Führungsabschnitt (32) aufweist.

9. Fördervorrichtung nach Anspruch 8, **dadurch gekennzeichnet, daß** ein Führungsabschnitt (32) eine abgerundete oder abgeschrägt-konische Gestalt aufweist, so daß das zugeordnete Käfigteil (17,18) beim arretieren automatisch in die korrekte Position geleitet wird.

10. Fördervorrichtung nach Anspruch 1, **dadurch gekennzeichnet, daß** ein Käfigteil (18) eine zylindrische Wandung aufweist, mit der der Käfig (16) zur Bildung einer Baueinheit in dem Träger (6) aufgenommen ist, und daß der trägerseitige Aufnahmebereich unabhängig von, sowie im Abstand zu den Befestigungsmitteln (20) für die Käfigteile (17,18) vorgesehen ist.

11. Fördervorrichtung nach Anspruch 2,3 oder 8, **dadurch gekennzeichnet, daß** die Käfigteile (17,18) mehr Rastarme (21,22) als Rastausnehmungen (25,26) aufweisen, und daß die Rastarme (21,22) in Käfigteil-Umfangsrichtung (U) mit ihrer Breite (B) wesentlich schmaler ausgebildet sind, als eine Breite (b) der Rastausnehmungen (25,26), so daß in Käfigteil-Umfangsrichtung (U) relativ zueinander beliebig verdreht angeordnete Käfigteile (17,18) unmittelbar arretierbar sind.

12. Fördervorrichtung nach einem oder mehreren der vorhergehenden Ansprüche, **dadurch gekennzeichnet, daß** ein Ende der Rückstellfeder (5) unmittelbar an einen Boden (27) des Käfigteils (18) anlegbar ist, und daß das andere Ende der Rückstellfeder (5) über einen napfförmigen Federteller (28) an ein Bord (29) des Käfigteiles (17) anlegbar ist.

13. Fördervorrichtung nach Anspruch 12, **dadurch gekennzeichnet, daß** eine Napfwandung (30) des Federtellers (28) ein Kolbenende (31) der Fördervorrichtung zumindest teilweise übergreift.

14. Federbaugruppe umfassend zwei Käfigteile (17,18) sowie eine Rückstellfeder (5) zum Einsatz in einer elektronisch geregelten Bremsanlage, **dadurch gekennzeichnet, daß** ein mehrteiliger Käfig (16) zur elastisch vorgespannten Kapselung der Rückstellfeder (5) derart vorgesehen ist, daß die Rückstellfeder (5) in Käfigteile (17,18) einlegbar und mit diesen komprimierbar ist, wobei eine Arretierung der mit Befestigungsmitteln (20) versehenen Käfigteile (17,18) aneinander infolge relativer Verschiebung der Käfigteile (17,18) zueinander, unter gleichzeitiger Vorspannung der Rückstellfeder (5) erfolgt.

15. Federbaugruppe nach Anspruch 14 **gekennzeichnet durch** die kennzeichnenden Merkmale nach einem oder mehreren der vorhergehenden Patentansprüche 2 bis 12.

## Claims

1. A supply device for the supply of pressure fluid into at least one vehicle brake, or into a pressure fluid accumulator, or into a master brake cylinder, comprising the following features:
a piston (2) is movably arranged in an accommodating member (4),
a carrier (6) bears a non-return valve (7) arranged coaxially to the piston (2) for the purpose of ventilating a working chamber (11) into which the piston (2) plunges,
a resetting spring (5) is arranged between the carrier (6) and the piston (2),
**characterized in that**
a multi-piece cage (16) is provided for the elastically preloaded casing of the resetting spring (5) in such a fashion that the resetting spring (5) can be inserted into cage parts (17, 18) and can be compressed with these, and the cage parts (17, 18) provided with fastening means (20) are locked at each other due to displacement of the cage parts (17, 18) in relation to each other, with a simultaneous preloading of the resetting spring (5).

2. The supply device as claimed in claim 1,
**characterized in that** a catch-type engagement is provided for fastening the cage parts (17, 18) to one another, and at least one locking arm (21, 22) is provided on at least one cage part (17) for engagement into a locking recess (25, 26) of an associated second cage part (18),

3. The supply device as claimed in claim 1,
**characterized in that** each cage part (17, 18) includes several fastening means (20), and **in that** for locking the cage parts (17, 18), at least two pairs of fastening means (20) with two locking arms (21, 22) and two locking recesses (25, 26) are active.

4. The supply device as claimed in claim 3,
**characterized in that** the two active fastening means (20) in general are arranged opposite each other.

5. The supply device as claimed in claim 1,
**characterized in that** each cage part (17, 18) includes fastening means (20) provided in pairs and lying diametrically opposite each other.

6. The supply device as claimed in claim 5,
**characterized in that** opposed fastening means (20) of a cage part (17, 18) have an equal design in each case.

7. The supply device as claimed in claim 5,
**characterized in that** opposed fastening means (20) of a cage part (17, 18) have a different design in each case.

8. The supply device as claimed in claim 1,
**characterized in that** at least one cage part (17, 18) includes a separate guiding portion (32), in particular for the mutual centering and guiding.

9. The supply device as claimed in claim 8,
**characterized in that** a guiding portion (32) has a rounded or inclined conical configuration so that the associated cage part (17, 18) is automatically led into the correct position in the locking operation.

10. The supply device as claimed in claim 1,
**characterized in that** a cage part (18) has a cylindrical wall, with which the cage (16) is accommodated in the carrier (6) for forming a modular unit, and **in that** the carrier-side accommodating area is provided independently of and spaced from the fastening means (20) for the cage parts (17, 18).

11. The supply device as claimed in claims 2, 3, or 8,
**characterized in that** the cage parts (17, 18) have a larger number of locking arms (21, 22) than locking recesses (25, 26), and **in that** in the cage-part circumferential direction (U), the width (B) of the locking arms (21, 22) is considerably smaller than a width (b) of the locking recesses (25, 26) so that cage parts (17, 18) arranged as twisted as desired relative to each other in cage-part circumferential direction (U) can be locked directly.

12. The supply device as claimed in any one or more of the preceding claims,
**characterized in that** one end of the resetting spring (5) is directly movable into abutment on a bottom (27) of the cage part (18), and **in that** the other end of the resetting spring (5) is movable into abutment on a brim (29) of the cage part (17) by way of a bowl-shaped spring retainer (28).

13. The supply device as claimed in claim 12,
**characterized in that** a bowl wall (30) of the spring retainer (28) extends at least in part over a piston end (31) of the supply device.

14. A spring assembly comprising two cage parts (17, 18) and a resetting spring (5) for use in an electronically controlled brake system,
**characterized in that** a multi-piece cage (16) for the elastically preloaded casing of the resetting spring (5) is provided in such a fashion that the resetting spring (5) can be inserted into cage parts (17, 18) and can be compressed with these, and the cage parts (17, 18) provided with fastening means (20) are locked at each other due to displacement of the cage parts (17, 18) in relation to each other, with a simultaneous preloading of the resetting spring (5)

15. The spring assembly as claimed in claim 14,
**characterized by** the characterizing features as claimed in any one or more of the preceding patent claims 2 to 12.

## Revendications

1. Dispositif de refoulement pour refouler un fluide sous pression dans au moins un frein de véhicule, ou dans un accumulateur de pression, ou dans un cylindre de frein principal, présentant les caractéristiques suivantes :
un piston (2) est disposé déplaçable dans in corps de réception (4) ;
un support (6) porte un clapet de non-retour (7) disposé coaxialement au piston (2) pour la ventilation d'un compartiment de travail (11) dans lequel plonge le piston (2) ;
un ressort de rappel (5) est disposé entre le support (6) et le piston (2),
**caractérisé en ce que**
il est prévu une cage (16) en plusieurs parties pour le blindage précontraint élastiquement du ressort :e rappel (5) de manière que le ressort de rappel (5) puisse être placé dans des parties de cage (17, 18) et comprimé avec celles-ci, et il se produit un blocage des parties de cage (17, 18), pourvues de moyens de fixation (20), les unes contre les autres, à la suite d'une translation relative des parties de cage (17, 18) les unes par rapport aux autres, et en même temps une précontrainte du ressort de rappel (5).

2. Dispositif de refoulement selon la revendication 1, **caractérisé en ce qu'**il est prévu une liaison à encliquetage pour la fixation des parties de cage (17, 18) les unes contre les autres, au moins un bras d'encliquetage (21, 22) étant prévu sur au moins une première partie de cage (17), pour l'engagement dans un évidement d'encliquetage (25, 26) d'une deuxième partie de cage (18) associée.

3. Dispositif de refoulement selon la revendication 1, **caractérisé en ce que** chaque partie de cage (17, 18) comporte plusieurs moyens de fixation (20), et **en ce que** pour le blocage des parties de cage (17, 18) au moins deux paires de moyens de fixation (20) opèrent avec deux bras c encliquetage (21, 22) et deux évidements d'encliquetage (25, 26).

4. Dispositif de refoulement selon la revendication 3, **caractérisé en ce que** les deux moyens de fixation (20) actifs sont disposés sensiblement l'un en face de l'autre.

5. Dispositif de refoulement selon la revendication 1, **caractérisé en ce que** chaque partie de cage (17, 18) comporte des moyens de fixation (20) prévus par paires et diamétralement opposés les uns aux autres.

6. Dispositif de refoulement selon la revendication 5, **caractérisé en ce que** des moyens de fixation (20) opposés d'une partie de cage (17, 18) sont tous réalisés identiques.

7. Dispositif de refoulement selon la revendication 5, **caractérisé en ce que** des moyens de fixation (20) opposés d'une partie de cage (17, 18) sont tous réalisés différents.

8. Dispositif de refoulement selon la revendication 1, **caractérisé en ce qu'**au moins une partie de cage (17, 18), en particulier pour le centrage radial réciproque et le guidage, comporte un segment de guidage (32) spécial.

9. Dispositif de refoulement selon la revendication 8, **caractérisé en ce qu'**un segment de guidage (32) présente une forme arrondie ou conique chanfreinée, ce qui fait que la partie de cage (17, 18) associée est guidée automatiquement dans la position correcte, lors du blocage.

10. Dispositif de refoulement selon la revendication 1, **caractérisé en ce qu'**une partie de cage (18) présente une paroi cylindrique par laquelle la cage (16) est reçue dans le support (6) pour former une unité de construction, et **en ce que** la zone de réception côté support est prévue indépendamment ainsi qu'à distance des moyens de fixation (20) pour les parties de cage (17, 18).

11. Dispositif de refoulement selon les revendications 2, 3 ou 8, **caractérisé en ce que** les parties de cage (17, 18) comportent plus de bras d'encliquetage (21, 22) que d'évidements d'encliquetage (25, 26), et **en ce que** les bras d'encliquetage (21, 22) sont réalisés sensiblement plus étroits dans la direction périphérique de parties de cage (U), avec leur largeur (B) qu'une largeur (b) des évidements d'encliquetage (25, 26), ce qui fait que dans la direction périphérique de partie de cage (U), des parties de cage (17, 18), disposées tournées de manière quelconque Les unes par rapport aux autres, peuvent être bloquées directement.

12. Dispositif de refoulement selon une ou plusieurs des revendications précédentes, **caractérisé en ce qu'**une extrémité du ressort de rappel (5) peut être appliquée directement contre un fond (27) de la partie de cage (18), et **en ce que** l'autre extrémité du ressort de rappel (5) peut être appliquée, par une coupelle de ressort (28) en forme de godet, contre un bord (29) de la partie de cage 17).

13. Dispositif de refoulement selon la revendication 12, **caractérisé en ce qu'**une paroi de godet (30) de la coupelle de ressort (28) passe au moins en partie sur une extrémité de piston (31) du dispositif de refoulement.

14. Ensemble ressort comprenant deux parties de cage (17, 18) ainsi qu'un ressort de rappel (5) pour sor utilisation dans un système de frein à régulation électronique, **caractérisés en ce qu'**il est prévu une cage (16) en plusieurs parties pour le blindage précontraint élastiquement du ressort de rappel (5), de manière que le ressort de rappel (5) puisse être placé dans des parties de cage (17, 18) et comprimé avec celles-ci, et il se produit un blocage des parties de cage (17, 18), pourvues de moyens de fixation (20), les unes contre les autres, à la suite d'une translation relative des parties de cage (17, 18) les unes par rapport aux autres, et en même temps une précontrainte du ressort de rappel (5).

15. Ensemble ressort selon la revendication 14, **caractérisé par** les caractéristiques de la partie caractérisante d'une ou plusieurs des revendications 2 à 12 précédentes.
